# EUROPÄISCHE PATENTSCHRIFT

(11) **EP 0 859 915 B1**
(45) Veröffentlichungstag und Bekanntmachung des Hinweises auf die Patenterteilung: **08.09.1999**
(21) Anmeldenummer: 96933262.6
(22) Anmeldetag: 23.10.1996
(51) Int. Cl.: F16B 13/12

(54) **BEFESTIGUNGSELEMENT**
SECURING COMPONENT
ELEMENT DE FIXATION

(30) Priorität: 06.11.1995 AT 182895
(43) Veröffentlichungstag der Anmeldung: 26.08.1998
(73) Patentinhaber: Mark, Rudolf, 4582 Spital am Pyhrn 152 (AT); Mark, Thomas, 4582 Spital am Pyhrn 204 (AT)
(72) Erfinder: Mark, Rudolf, 4582 Spital am Pyhrn 152 (AT); Mark, Thomas, 4582 Spital am Pyhrn 204 (AT)
(74) Vertreter: Secklehner, Günter, Dr.
(86) Internationale Anmeldenummer: AT9600204
(87) Internationale Veröffentlichungsnummer: WO9717547

(56) Entgegenhaltungen:
- DE-A- 3 005 437
- FR-A- 353 289
- FR-A- 2 447 478
- US-A- 1 396 569
- US-A- 4 133 245
- US-A- 4 696 423

## Beschreibung

Die Erfindung betrifft ein Befestigungselement, wie es im Oberbegriff des Anspruches 1 beschrieben ist.

Ein Befestigungselement mit einem zylinderförmigen Mantel, der ein Innengewinde aufweist und mit Spreizelementen versehen ist, wird in der US-PS-4,133,245 beschrieben. Dieses in eine Bohrung eines Bauteils einsetzbare Befestigungselement weist weiters an seinem den Spreizelementen entgegengesetzten Endbereich flanschförmige Fortsätze auf, die eine Abstützung in axialer Richtung bewirken. Zur Verankerung des Befestigungselementes mittels der in radialer Richtung mit dem Eindrehen einer Schraube verformbaren Spreizelementen ist eine aufwendig vorbereitete Bohrung mit einer Ansenkung von der Rückseite des das Befestigungselement aufnehmenden Bauteils erforderlich. Damit ist aber eine Anwendung des Befestigungselementes in einer sogenannten Sackbohrung nicht möglich.

Aus der DE-OS-30 05 437 ist weiters ein Spreizdübel bekannt, der zylinderförmig ausgebildet ist und Spreizelemente an seinem in eine Bohrung einsetzbaren Ende aufweist, die in Richtung der Längsmittelachse verformt sind und beim Eintreiben eines speziell geformten Aufweiteelementes aufgeweitet und gegen die Bohrungswände bei der vorbereiteten Bohrung gepreßt werden und damit eine Verankerung der Spreizhülse bewirken. Nachteilig dabei ist, daß für die Verwendung als Befestigungselement ein auf den Spreizdübel abgestimmtes, in diesem eintreibbares Spreizelement erforderlich ist und für eine ausreichende Verankerung sehr hohe axiale Schlagkräfte erforderlich sind.

Weiters weist der Spreizdübel keine schneidenförmigen Fortsätze, welche in das umliegende Material eindringen, auf, wodurch sich keine genügend hohen Haltekräfte in der Bohrung erzielen lassen. Da weiters an der Innenwand des Spreizdübels keinerlei Gewinde angeordnet ist und das Spreizelement eine glatte Oberfläche aufweist, ist es möglich, daß sich das Spreizelement unter widrigen Umständen aus dem Spreizdübel löst und so die Befestigung nicht aufrecht erhalten werden kann.

Weiters ist aus der US 1,396,569 A ein Befestigungselement bzw. ein Bolzenanker bekannt, wobei es sich um einen Blechzuschnitt bzw. Blechformteil, welcher Spreizelemente aufweist, handelt. Die Spreizelemente werden über einen streifenförmigen Bund, welcher die selbe Ausrichtung wie die Spreizelemente aufweist, verbunden, wobei dieser streifenförmige Bund eine Einrollung des Blechzuschnittes ermöglicht und sich so ein annähernd zylinderförmiger Bauteil ergibt. Der Bolzenanker bzw. das Befestigungselement weist über den Außenmantel vorragende, gewindeartige Erhebungen auf, durch welche eine Verankerung des Bolzenankers in einem diesen umgebenden Bohrloch ermöglicht werden soll. Nachteilig bei dieser Ausführung des Befestigungselementes ist, daß dieses nicht aus einem in sich geschlossenem Bauteil gebildet ist und sich so das Befestigungselemt beim Einbringen eines Bolzens unerwünscht aufweiten kann, bzw. daß sich ein Innendurchmesser ungewollt vergrößert. Durch dieses unerwünschte Aufweiten des Befestigungselementes wird die Halterung eines in das Befestigungselement eingebrachten Bolzens nachteilig beeinflußt und im Extremfall kann es zu einer Lösung der Verbindung des Bolzens im Befestigungselement kommen. Weiters sind die außen auf den Spreizelementen angeordneten Erhebungen nicht schneidenförmig ausgebildet, sodaß ein Eindringen in das das Befestigungselement umgebende Material verhindert wird und so keine formschlüssige Befestigung des Befestigungselementes im Bohrloch erfolgen kann.

Aufgabe der Erfindung ist es, ein Befestigungselement zu schaffen, das einen geringen Materialeinsatz erfordert und hohe Auszugskräfte aufnehmen kann und in der Montage einfach zu handhaben ist.

Diese Aufgabe der Erfindung wird durch die im Anspruch 1 wiedergegebenen Merkmale gelöst. Der überraschende Vorteil liegt nunmehr darin, daß die Anwendung normgerechter Schraubelemente ermöglicht wird und bereits in der ersten Montagephase beim Eindrehen einer Schraube mit dem Eindringen der Schneidenfortsätze der Spreizelemente in das Grundmaterial eine selbsttätige Verankerung erfolgt und einem Mitdrehen des Befestigungselementes sofort ein hoher Widerstand entgegensetzt wird. Damit eignet sich das erfindungsgemäße Befestigungselement in ausgezeichneter Weise auch für den Einsatz in Bauteilen mit geringeren Festigkeitseigenschaften, z.B. in Aluminium, Kunststoff, etc. Weiters können die Spreizelemente leicht in das Material des Grundkörpers, in dem das Befestigungselement angeordnet ist, eindringen können und somit wird eine Verformungskraft beim Einschrauben eines Befestigungsmittels reduziert.

Von Vorteil ist aber auch eine Ausbildung nach Anspruch 2, da lediglich die Spreizelemente beim Einschrauben eines Befestigungsmittels, wie z.B. einer Schraube, nach außen gedrückt werden und in die Schlitze Material eindringen kann, was eine zusätzliche Verdrehsicherung bewirkt.

Weiters ist eine Ausbildung nach Anspruch 3 von Vorteil, wodurch das Befestigungselement leicht in eine Bohrung des Grundkörpers eingebracht werden kann.

Als besonders günstig haben sich die Weiterbildungen nach den Ansprüchen 4 und 5 herausgestellt, wodurch entweder ein Zentrieransatz zum leichten Einführen des Befestigungselementes in den Grundkörper oder die Schneidenfortsätze in einfacher Weise hergestellt werden können.

Von Vorteil ist aber auch eine Ausbildung nach Anspruch 6, wobei die Spreizelemente hier eine Verformung in Richtung der Längsmittelachse bzw. eine Einschnürrung aufweisen und dadurch beim Einbringen eines Aufweitelementes die Endbereiche der Spreizelemente in das diese umgebende Material eindringen und so eine formschlüssige Verbindung des Befestigungselementes im vorgefertigten Bohrloch ermöglicht wird.

Möglich ist aber auch eine Ausführungsvariante nach Anspruch 7, bei der das Eindringen der Spreizelemente in den Grundkörper weiter erleichtert wird.

Eine Ausbildung nach Anspruch 8 hat den Vorteil, daß eine äußerst belastbare Verdrehsicherung bei geringen erforderlichen Preßkräften zum Einpressen des Flansches in den Grundkörper geschaffen wird.

Vor Vorteil sind weiters die Ausführungen nach den Ansprüchen 9 und 10, bei denen die Verdrehsicherung in einfacher Weise hergestellt werden kann, was eine Reduzierung von Fertigungs- und Materialkosten zur Folge hat.

Weiters ist eine Ausbildungsvariante nach Anspruch 11 vorteilhaft, da die Spreizelemente nur den Kernbereich eines in das Befestigungselement einzubringenden Befestigungsmittels beim Aufweiten belasten, wodurch ein oftmaliges, verschleißfreies Verschrauben des Befestigungsmittels mit dem Befestigungselement möglich ist.

Günstig ist eine Weiterbildung nach Anspruch 12, wodurch eine auch gegen große Auszugskräfte gesicherte Verankerung des Befestigungselementes in einem Grundkörper möglich ist.

Möglich ist weiters eine Variante nach Anspruch 13, bei welcher die Schraube über den gesamten Verlauf des Befestigungselementes in Eingriff steht und große Auszugskräfte aufnehmen kann.

Die Ausführungsvariante nach Anspruch 14 ermöglicht es in einfacher Weise, den Bauteil einstückig herzustellen und reduziert Fertigungs- und Materialkosten.

Durch die Weiterbildung nach Anspruch 15 wird ein vorzeitiger Verschleiß des Befestigungselementes, insbesondere bei ungünstigen Witterungsverhältnissen vermieden.

Schließlich ist noch eine Weiterbildung nach Anspruch 16 möglich, durch die das Befestigungselement unterschiedlichen äußeren Einwirkungen angepaßt werden kann.

Zum besseren Verständnis der Erfindung wird diese anhand der in den Zeichnungen gezeigten Ausführungsbeispiele näher erläutert.

Es zeigen:
- Fig. 1: ein erfindungsgemäßes Befestigungselement, geschnitten, in der Seitenansicht;
- Fig. 2: das erfindungsgemäße Befestigungselement in der Draufsicht;
- Fig. 3: eine andere Ausführungsvariante des erfindungsgemäßen Befestigungselementes, geschnitten, in der Seitenansicht;
- Fig. 4: das erfindungsgemäße Befestigungselement in der Draufsicht;
- Fig. 5: eine weitere Ausführungsvariante des erfindungsgemäßen Befestigungselementes in der Draufsicht;
- Fig. 6: das erfindungsgemäße Befestigungselement, geschnitten, in der Seitenansicht;
- Fig. 7: ein erfindungsgemäßes Befestigungselement im Montagezustand, geschnitten, in der Seitenansicht.

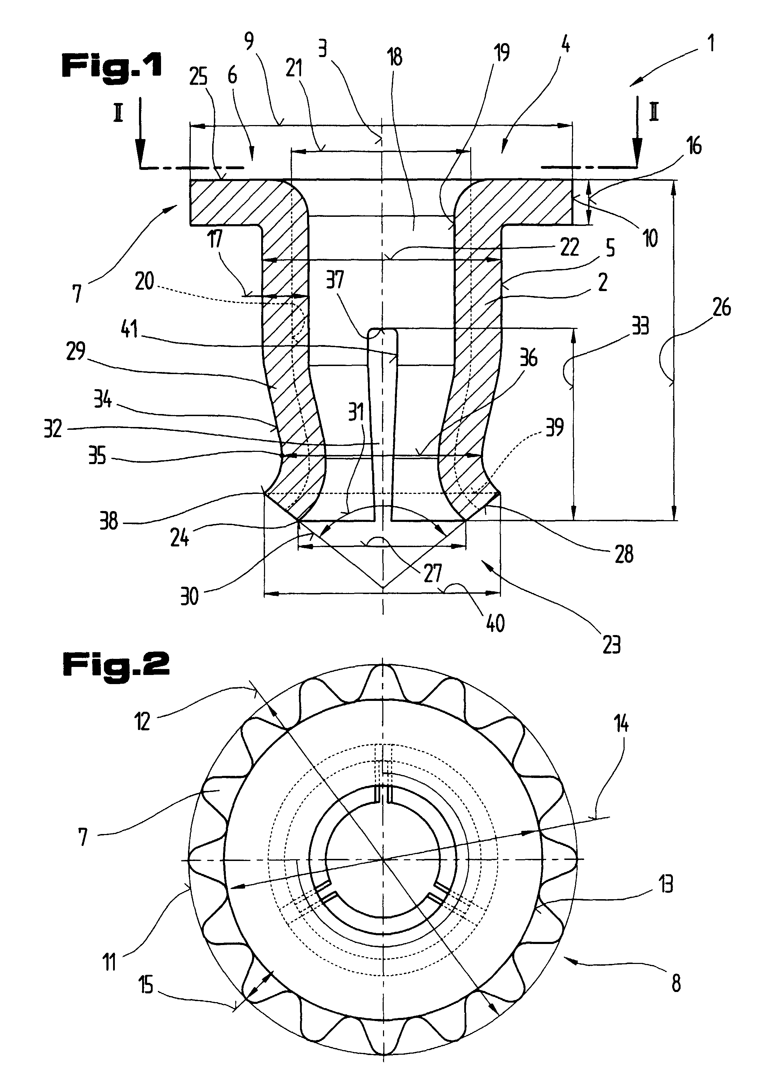

In den gemeinsam beschriebenen Fig. 1 und 2 ist ein Befestigungselement 1 im Längsschnitt und in der Draufsicht dargestellt. Dieses besteht aus einem zylinderförmigen Mantel 2, welcher konzentrisch um eine Längsmittelachse 3 verläuft und an einem seiner stirnseitigen Enden zumindest ein Stützelement 4 aufweist, welches den Mantel 2, insbesondere eine diesen begrenzende, konzentrisch um die Längsmittelachse 3 verlaufende Außenseite 5 entgegengesetzt zur Längsmittelachse 3 in einer zur Längsmittelachse 3 senkrechten Ebene überragt. Das Stützelement 4 bildet dabei einen Flansch 6 aus und besitzt zumindest einen, vorzugsweise mehrere Ankerfortsätze 7, welche durch eine Stirnverzahnung 8 gebildet sind, die in eine den Flansch 6 begrenzende, in einem halben Flanschdurchmesser 9 konzentrisch um die Längsmittelachse 3 verlaufende und parallel zur Außenseite 5 angeordnete Stirnfläche 10 eingeformt ist. Ein Kopfkreis 11, welcher die Stirnverzahnung 8 entgegengesetzt zur Längsmittelachse 3 begrenzt, besitzt einen Kopfkreisdurchmesser 12, welcher dem Flanschdurchmesser 9 entspricht. Ein Fußkreis 13, welcher die Stirnverzahnung 8 in Richtung der Längsmittelachse 3 begrenzt, verläuft konzentrisch um die Längsmittelachse 3 und besitzt einen Fußkreisdurchmesser 14, welcher um eine doppelte Zahnhöhe 15 der Stirnverzahnung 8 geringer ist als der Kopfkreisdurchmesser 12.

Der Flansch 6 besitzt weiters eine parallel zur Längsmittelachse 3 gemessene Flanschhöhe 16, welche in etwa einer im rechten Winkel zur Längsmittelachse 3 gemessenen Manteldicke 17 des Mantels 2, welche zwischen 0,5 mm und 2 mm liegt oder bevorzugt 1,5 mm beträgt, entspricht. Der Mantel 2 umgrenzt konzentrisch einen Innenraum 18 des Befestigungselementes 1 und besitzt an einer der Längsmittelachse 3 und dem Innenraum 18 zugewandten Innenfläche 19 ein Innengewinde 20. Dieses kann als metrisches Gewinde, Spitzgewinde, Trapezgewinde, Sägegewinde, etc. ausgebildet sein und weist einen Gewindedurchmesser 21 auf, welcher geringer ist als ein die Außenseite 5 des Mantels 2 außen umgrenzender Außendurchmesser 22.

An einem den Flansch 6 entgegengesetzten Endbereich 23 besitzt das Befestigungselement 1 eine in einer rechtwinkelig zur Längsmittelachse 3 verlaufenden Ebene gelegene, konzentrisch um die Längsmittelachse 3 umlaufende Stirnkante 24, welche von einer parallel zu dieser verlaufenden, den Flansch begrenzenden Flanschaußenseite 25 um eine Gesamtlänge 26 des Befestigungselementes 1, die parallel zur Längsmittelachse 3 verläuft, distanziert ist. Die Gesamtlänge 26 entspricht in etwa dem zweifachen Außendurchmesser 22 des Mantels 2. Die Stirnkante 24 verläuft dabei in einem halben Stirnkantendurchmesser 27 konzentrisch um die Längsmittelachse 3. Dieser entspricht im vorliegenden Ausführungsbeispiel in etwa dem Gewindedurchmesser 21 des Innengewindes 20, dessen Länge in etwa der Gesamtlänge 26 entspricht.

Von der Stirnkante 24 verlaufen konzentrisch und geneigt zur Längsmittelachse 3 Stirnflächen 28, welche den Endbereich 23 kegelstumpfförmig ausbilden. Eine Stirnfläche 28 begrenzt dabei jeweils ein den Mantel 2 in seiner Längsrichtung überragendes und in radialer Richtung verformbares Spreizelement 29 in Richtung des Endbereiches 23, welcher dem Stützelement 4 abgewandt ist. Zwei einander gegenüberliegende, in einer durch die Längsmittelachse 3 verlaufenden Ebene und auf den winkelig zueinander verlaufenden Stirnflächen 28 liegende Mantellinien 30 schneiden sich auf der Längsmittelachse 3 in einem vom Endbereich 23 entgegengesetzt zum Flansch 6 und außerhalb des Innenraumes 18 liegenden Bereich und schließen einen Winkel 31 ein, welcher im vorliegenden Fall als spitzer Winkel gestaltet ist. Von der Stirnkante 24 verlaufen parallel zur Längsmittelachse 3 beispielsweise drei gleichmäßig verteilte Schlitze 32, welche die Stirnkante 24 durchbrechen und von dieser in Richtung zum Flansch 6 um eine Schlitzhöhe 33 ragen. Die Spreizelemente 29 besitzen im Verlauf der Schlitzhöhe 33 eine konkav in Richtung der Längsmittelachse 3 verlaufende Außenfläche 34, auf welcher einander gegenüberliegende Scheitelpunkte 35 liegen, die einen Einschnürdurchmesser 36 der in Richtung der Längsmittelachse 3 konkav verlaufenden Außenfläche 34 der Spreizelemente 29 begrenzen. Dadurch ist im Bereich der Scheitelpunkte 35 ein Abstand einander zugewandter Innenflächen der Spreizelemente kleiner als der Gewindedurchmesser 21 des Innengewindes 20.

Die Spreizelemente 29 verlaufen dadurch von einer den Schlitz 32 in Richtung zum Flansch 6 begrenzenden Grundfläche 37 in Richtung der Scheitelpunkte 35 konvergierend und von diesen in Richtung zum Endbereich 23 erweiternd. Dadurch ist der Einschnürdurchmesser 36 geringer als der Außendurchmesser 22 des Mantels 2. Die konkav zur Längsmittelachse 3 verlaufenden Außenflächen 34 bilden mit den einen Kegelstumpf ausbildenden Stirnflächen 28 Schnittkanten 38 aus, welche auf einem Hüllkreis 39 liegen. Dieser besitzt einen Hüllkreisdurchmesser 40, der größer ist als der Einschnürdurchmesser 36 und in etwa dem Außendurchmesser 22 entspricht. Der Hüllkreis 39 verläuft dabei in einer rechtwinkelig zur Längsmittelachse 3 befindlichen Ebene. Die Schlitze 32 sind bei dieser Ausführung in einem Winkel von 120° um die Längsmittelachse 3 zueinander versetzt und bilden an der Außenfläche 34 im rechten Winkel zur Stirnkante 24 parallel zur Längsmittelachse 3 verlaufende Stirnkanten 41 aus. Das Stützelement 4, der Mantel 2 und die Spreizelemente 29 sind aus einem einstückigen Bauteil aus Metall.

Der guten Ordnung halber sei noch erwähnt, daß das Winkelverhältnis der um die Längsmittelachse 3 angeordneten Schlitze 32 auch ein anderes sein kann, bzw. daß auch nur zwei Schlitze 32 und damit zwei Spreizelemente 29 ausgebildet werden können.

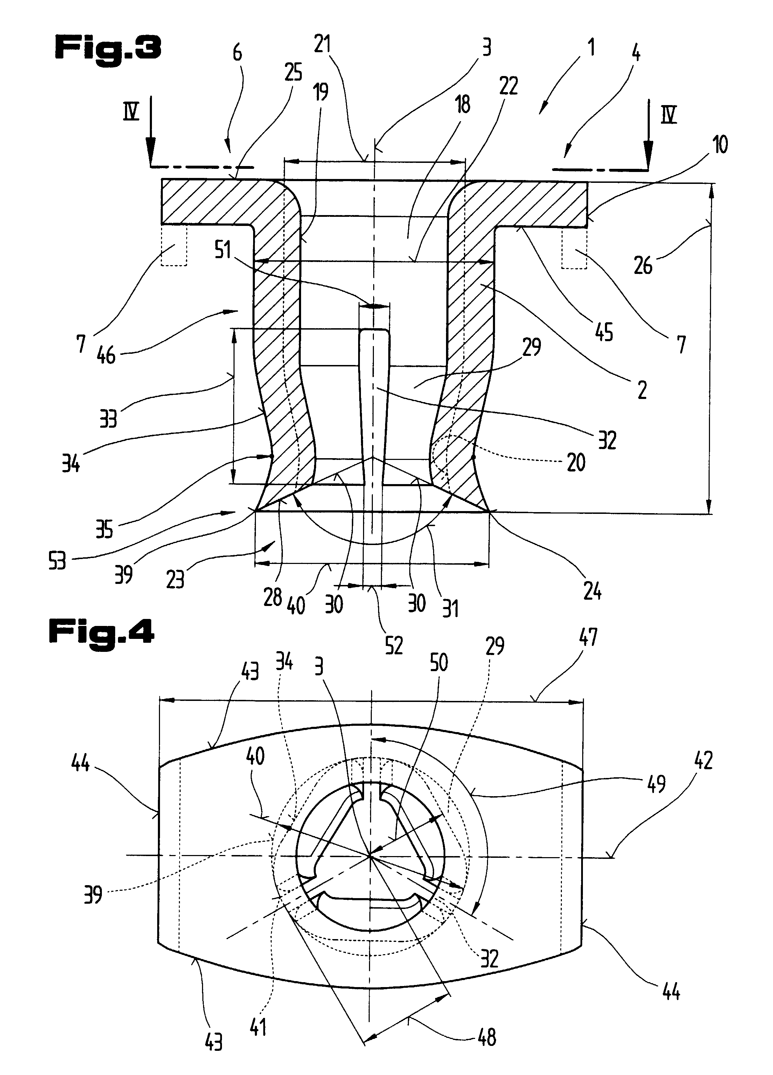

In den Fig. 3 und 4 ist eine weitere Ausführungsvariante des Befestigungselementes 1 dargestellt. Dieses weist den Flansch 6 auf, welcher das Stützelement 4 ausbildet, deren Stirnfläche 10 zwei um eine durch die Längsmittelachse 3 verlaufende Längssymmetrieebene 42 symmetrisch angeordnete Längsstirnflächen 43 besitzt, welche konvex zur Längssymmetrieebene 42 verlaufen. Diese werden durch je eine rechtwinkelig zur Längssymmetrieebene 42 verlaufende Querstirnfläche 44 verbunden. Dieser von einer kreisförmigen Umrißform verschiedene Verlauf der Stirnfläche 10 ermöglicht bei Einpressen des Befestigungselementes 1 eine Verdrehsicherung, welche aber auch durch die Ankerfortsätze 7, wie in strichlierten Linien dargestellt, erreicht werden kann, die eine parallel und abgewandt zur Flanschaußenseite 25 verlaufende Flanschunterseite 45 parallel zur Längsmittelachse 3 bzw. zum Mantel 2 in Richtung zum Endbereich 23 überragen. Die Ankerfortsätze 7 können einstückig mit dem Flansch 6 verbunden, insbesondere an diesen angeformt oder lösbar an der Flanschunterseite 45 angeordnet sein. Sie weisen dabei bevorzugt den selben Verlauf auf, wie die Querstirnflächen 44. Es ist jedoch auch möglich, die Ankerfortsätze 7 im Bereich der Längsstirnflächen 43 an der Stirnfläche 10 oder an der Flanschunterseite 45 anzuordnen.

Das Befestigungselement 1 besitzt wiederum einen beispielsweise rotationssymmetrisch um die Längsmittelachse 3 verlaufenden Mantel 2, welcher einen Schaft 46 ausbildet. An der den Mantel 2 in Richtung der Längsmittelachse 3 begrenzenden Innenfläche 19 befindet sich wiederum ein Innengewinde 20, welches vom Bereich des Flansches 6 bis zum Endbereich 23 verläuft. Es kann jedoch auch lediglich im Bereich der Spreizelemente 29 angeordnet sein. Der Schaft 46 besitzt den Außendurchmesser 22, welcher größer ist als der Gewindedurchmesser 21 des Innengewindes 20 und kleiner ist als eine parallel zur Längssymmetrieebene 42 gemessene, die Querstirnflächen 44 distanzierende Flanschlänge 47. Im Anschluß an den Schaft 46 erstrecken sich in Richtung zum Endbereich 23 wiederum beispielsweise drei Spreizelemente 29, welche durch Schlitze 32 voneinander beabstandet sind. Diese erstrecken sich von einer von der Flanschaußenseite 25 um die Gesamtlänge 26 distanzierten Stirnkante 24 um eine Schlitzhöhe 33 in Richtung des Flansches 6.

Die dem Flansch 6 abgewandten und die Spreizelemente 29 zum Endbereich 23 hin begrenzenden Stirnflächen 28 verlaufen bei dieser Ausführung in Richtung zur Längsmittelachse 3 und zum vom Mantel 2 umgrenzten Innenraum 18 geneigt, wobei die auf einer durch die Längsmittelachse 3 verlaufenden Ebene und auf den Stirnflächen 28 liegenden, einander zugewandt verlaufenden Mantellinien 30 sich auf der Längsmittelachse 3 im Innenraum 18 schneiden und den Winkel 31 bilden. Die Außenfläche 34 bzw. der äußere Umrißverlauf der Spreizelemente 29 ist bei dieser Ausführungsform nicht konzentrisch um die Längsmittelachse 3 ausgebildet, sondern besitzt bei Betrachtung der Draufsicht einen trigonalen Verlauf. Dabei ist die Stirnkante 41, welche durch den Schlitz 32 und der Außenfläche 34 gebildet wird, von der Längsmittelachse 3 um einen Abstand 48 distanziert, welcher dem halben Hüllkreisdurchmesser 40 des die Spreizelemente 29 umhüllenden, insbesondere die Stirnkanten 41 verbindenden, konzentrisch um die Längsmittelachse 3 verlaufenden Hüllkreises 39 entspricht. Die Schlitze 32 sind um die Längsmittelachse 3 um eine Teilung 49 von beispielsweise 120° winkelig zueinander versetzt.

Vorzugsweise im Bereich der halben Teilung 49 im vorliegenden Ausführungsbeispiel, also 60° von einem Schlitz 32 winkelversetzt, ist die Außenfläche 34 der Spreizelemente 29 von der Längsmittelachse 3 um eine Distanz 50 beabstandet, welche kleiner ist als der Abstand 48. Die Distanz 50 bildet weiters den der Längsmittelachse 3 am nächsten liegenden Punkt auf der Außenfläche 34 aus. Im Längsschnitt entlang der Längsmittelachse 3 weisen die Spreizelemente 29, insbesondere die Außenfläche 34 einen konkav in Richtung der Längsmittelachse 3 ausgebildeten Verlauf und einen Scheitelpunkt 35 auf, von dem sich die Außenfläche 34 in Richtung des Endbereiches 23 bzw. der Stirnkante 24 wiederum erweitert. Der die Stirnkanten 24 umhüllende Hüllkreis 39 und dessen Hüllkreisdurchmesser 40 ist nicht größer als der Außendurchmesser 22 des Schaftes 46 bzw. des Mantels 2. Bezüglich der Außenform des Flansches 6 sei noch erwähnt, daß dieser auch eine quadratische, rechteckige, vieleckige, jedenfalls aber eine von einer rotationssymetrischen Ausbildung abweichende Form aufweisen kann.

Der Schlitz 32 weist im Bereich der Schlitzhöhe 33 eine rechtwinkelig zur Längsmittelachse 3 gemessene Schlitzbreite 51 auf, welche durch die Einformung der Spreizelemente 29, d.h. durch den gekrümmten Verlauf der Außenfläche 34, in Richtung zum Endbereich 23 abnimmt und in der rechtwinkelig zur Längsmittelachse 3 durch die Stirnkanten 24 verlaufenden Ebene eine Öffnungsweite 52, welche geringer ist als die Schlitzbreite 51, besitzt. Die Spreizelemente 29 verlaufen durch den zur Längsmittelachse 3 konkaven Verlauf der Außenfläche 34 konvergierend zueinander, wobei ein im rechten Winkel zur Längsmittelachse 3 auf einen Punkt der Außenfläche 34 gemessener Abstand vom Scheitelpunkt 35 in Richtung zum Endbereich 23 hin zunimmt. Der Teilbereich der Außenfläche 34 zwischen dem Scheitelpunkt 35 und der Stirnkante 24 bildet mit den Stirnflächen 28 der Spreizelemente 29 Schneidenfortsätze 53 aus, welche vom Hüllkreis 39 in einer rechtwinkelig zur Längsmittelachse 3 verlaufenden Ebene umgrenzt werden. Die Schneidenfortsätze 53 sind dabei in dem vom Stützelement 4 abgewandten Endbereich 23, die Außenfläche 34 in zur Längsmittelachse 3 radialer Richtung überragend, in Umfangsrichtung umlaufend angeordnet. Das Befestigungselement 1 ist aus einem einstückigen Bauteil aus Metall geformt, wobei das Blech des Bauteils aus einem nicht rostenden Material gebildet bzw. mit einer Oberflächenbeschichtung versehen sein kann.

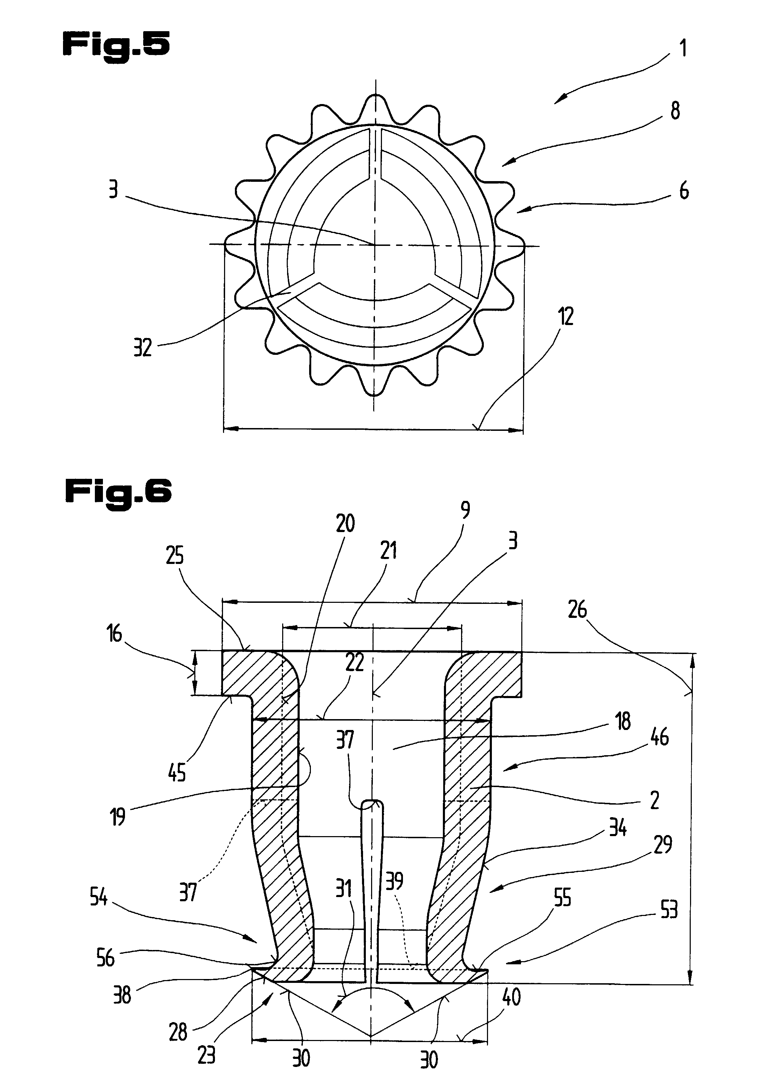

In den Fig. 5 und 6 ist eine andere Weiterbildung des Befestigungselementes 1 gezeigt. Der Flansch 6 besitzt die konzentrisch um die Längsmittelachse 3 verlaufende Stirnverzahnung 8, deren Kopfkreisdurchmesser 12 dem Flanschdurchmesser 9 entspricht. Der Flansch 6 wird in einer parallel zur Längsmittelachse 3 gemessenen Richtung von der Flanschhöhe 16 begrenzt, welche die Flanschaußenseite 25 und die Flanschunterseite 45 distanziert. Von der Flanschunterseite 45 erstreckt sich in Richtung des Endbereiches 23 der durch den konzentrisch um die Längsmittelachse 3 verlaufenden Mantel 2 gebildete Schaft 46 mit an dessen Innenfläche 19 angeordneten Innengewinde 20 mit dem Gewindedurchmesser 21. Zwischen dem Schaft 46 und dem Endbereich 23 erstrekken sich die Spreizelemente 29, welche vom Schaft 46 durch die Grundfläche 37 der Schlitze 32 getrennt sind. Die Außenflächen 34 der Spreizelemente 29 verlaufen in entgegengesetzter Richtung zum Flansch 6 in Richtung zur Längsmittelachse 3 in etwa linear verjüngend, wobei das Innengewinde 20, insbesondere der Gewindedurchmesser 21 in entgegengesetzter Richtung zum Flansch 6 sich in etwa im selben Maß verjüngt wie die Außenflächen 34. Die Außenflächen 34 weisen, wie bereits beschrieben, in der Draufsicht des Befestigungselementes 1 einen trigonalen Verlauf auf. Dem Endbereich 23 zugewandt werden die Spreizelemente 29 durch eine von der Flanschaußenseite 25 um eine Gesamtlänge 26 des Befestigungselementes 1 distanzierte Stirnkante 24 begrenzt, an die die winkelig zueinander verlaufenden Stirnflächen 28 der Schneidenfortsätze 53 anschließen. Auf einer längs der Längsmittelachse 3 durch das Befestigungselement 1 verlaufenden Ebene und auf den Stirnflächen 28 liegend, befinden sich die Mantellinien 30, welche einen auf der Längsmittelachse 3 außerhalb des Innenraumes 18 liegenden Schnittpunkt besitzen und einen Winkel 31 einschließen. Von den Schnittkanten 38, welche ebenfalls trigonal um die Längsmittelachse 3 verlaufen und auf einem den Hüllkreisdurchmesser 40 aufweisenden Hüllkreis 39 liegen, erstreckt sich konkav in Richtung zur Längsmittelachse 3 eine Rundung 54, welche die Schnittkanten 38 mit der Außenfläche 34 der Spreizelemente 29 verbindet. Der Hüllkreisdurchmesser 40 entspricht dabei dem Außendurchmesser 22 des Schaftes 46. Die Rundung 54 besteht aus einer, auf einer im rechten Winkel zur Längsmittelachse 3 verlaufenden Ebene liegenden, trigonal um die Längsmittelachse 3 verlaufenden Fläche 55, welche von den Schnittkanten 38 zur Längsmittelachse 3 verläuft und die auch in Richtung zur Längsmittelachse 3 und zum Endbereich 23 geneigt ausgebildet sein kann. Die Fläche 55 mündet in eine diese mit der Außenfläche 34 der Spreizelemente 29 verbindende Krümmungsfläche 56. Durch diese Ausbildung wird eine Art Widerhaken geschaffen.

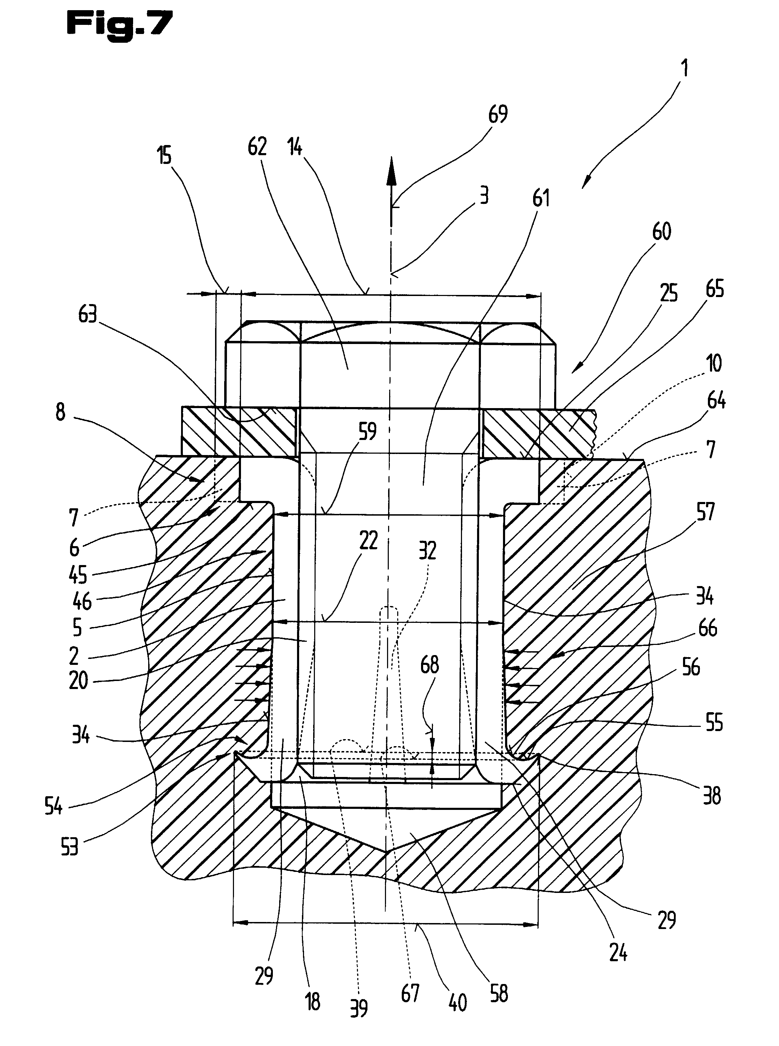

In der Fig. 7 ist das Befestigungselement 1 im Montagezustand dargestellt. Es ist dabei in einem Grundkörper 57 angeordnet, dessen Festigkeit vorzugsweise geringer ist als die des Befestigungselementes 1 und der beispielsweise aus Kunststoff oder Aluminium bzw. Weicheisenlegierungen hergestellt ist. Das Befestigungselement 1 wird dabei im Bereich der Stirnflächen 10 des Flansches 6, der Flanschunterseite 45 und der Außenseite 5 des Mantels 2 bzw. des Schaftes 46 sowie an der Außenfläche 34 der Spreizelemente 29 außen umgrenzt. Der Grundkörper 57 weist eine Bohrung 58 auf, welche vorzugsweise konzentrisch um die Längsmittelachse 3 verläuft und einen Bohrungsdurchmesser 59 besitzt, der in etwa dem Außendurchmesser 22 des Mantels 2 bzw. des Schaftes 46 entspricht.

Die in die Stirnfläche 10 eingeformten, durch die Stirnverzahnung 8 gebildeten Ankerfortsätze 7 sind in dem Grundkörper 57 eingepreßt, sodaß das Material des Grundkörpers 57 in den Bereich der Zahnhöhe 15 bis zum Fußkreisdurchmesser 14 eindringt. Im Innenraum 18 des Befestigungselementes 1 ist ein Befestigungsmittel 60, insbesondere eine Schraube 61 angeordnet, welche in das Innengewinde 20 des Befestigungselementes 1 eingeschraubt ist. Zwischen einer einen Schraubenkopf 62 in Richtung zum Befestigungselement 1 begrenzenden Kopfunterseite 63 und einer beispielsweise mit der Flanschaußenseite 25 ebenflächig verlaufenden Grundkörperoberseite 64 ist ein Montageteil 65 angeordnet und lösbar gehaltert. Das Eindrehen der Schraube 61 bewirkt im Bereich der Spreizelemente 29 eine Aufweitung entgegengesetzt zur Längsmittelachse 3, wodurch es zwischen der Außenfläche 34 der Spreizelemente 29 und dem Grundkörper 57 zu einer Flächenpressung - Pfeile 66 - kommt.

Darüber hinaus wird aber auch die Stirnkante 24 und die Schnittkante 38 der Schneidenfortsätze 53 in entgegengesetzter Richtung zur Längsmittelachse 3 in den Grundkörper 57 eingepreßt, wodurch dieser in diesem Bereich verformt wird. Der die Schnittkante 38 außen umhüllende Hüllkreis 39 bzw. dessen Hüllkreisdurchmesser 40 ist dabei größer als der Bohrungsdurchmesser 59 der Bohrung 58. Durch das Einpressen der Stirnkante 24 und der Schnittkante 38 der Spreizelemente 29 in den Grundkörper 57 bleibt der Materialbereich des Grundkörpers 57, welcher mit den Schlitzen 32 korrespondiert, annähernd unberührt, wodurch es in diesem Bereich zu fast keiner Verformung des Grundkörpers 57 kommt, was zur Folge hat, daß das Befestigungselement 1 zusätzlich zu den Ankerfortsätzen 7 verdrehgesichert im Grundkörper 57 angeordnet ist. Durch das Eindringen der Schnittkante 38 in den Grundkörper 57 wird überdies eine Art Widerhaken gebildet, da die Schnittkanten 38 in Richtung zum Flansch 6 ausschwenken. Dadurch ist der Hüllkreis 39 von einer im Übergangsbereich der Fläche 55 und der Krümmungsfläche 56 der Rundung 54 rechtwinkelig zur Längsmittelachse 3 verlaufenden Hilfsebene 67 in Richtung des Flansches 6 um einen Versatz 68 beabstandet.

In diesen Versatz 68 dringt das Material des Grundkörpers 57 ein und bewirkt eine sehr große Widerstandskraft entgegengesetzt zu einer allfällig wirkenden Auszugskraft - Pfeil 69. Überdies wird dadurch die Flanschunterseite 45 weiter gegen den Grundkörper 57 gedrückt, wodurch das Befestigungselement 1 äußerst fest im Grundkörper 57 verankert wird. Durch die Flächenpressung - Pfeile 66 - ergibt sich eine kraftschlüssige und durch das Eindringen der Schnittkanten 38 in den Grundkörper 57 eine formschlüssige Verbindung zwischen dem Grundkörper 57 und dem Befestigungselement 1, wodurch bei gleichzeitiger Verdrehsicherung das Befestigungselement 1 auch gegen sehr große Auszugskräfte - Pfeil 69 - gesichert ist und somit eine äußerst hohe Belastbarkeit der gesamten Verbindung erreicht wird.

Weiters sei erwähnt, daß für die bessere Darstellung des Erfindungsgegenstandes und dessen Ausführungsdetails die Figuren teilweise unmaßstäblich dargestellt sind.

Weiters sei festgehalten, daß die verschiedenen Ausführungsdetails des Befestigungselementes 1 miteinander kombinierbar sind, beispielsweise die Ausbildung des Flansches 6 und der Ankerfortsätze 7, die Ausbildung der Spreizelemente 29, insbesondere dessen Stirnflächen 28, der Verlauf der Stirnkanten 24 bzw. der Schnittkanten 38, der Verlauf der Außenfläche 34 und die Anzahl der Schlitze 32.

### Bezugszeichenaufstellung

- 1: Befestigungselement
- 2: Mantel
- 3: Längsmittelachse
- 4: Stützelement
- 5: Außenseite

- 6: Flansch
- 7: Ankerfortsatz
- 8: Stirnverzahnung
- 9: Flanschdurchmesser
- 10: Stirnfläche

- 11: Kopfkreis
- 12: Kopfkreisdurchmesser
- 13: Fußkreis
- 14: Fußkreisdurchmesser
- 15: Zahnhöhe

- 16: Flanschhöhe
- 17: Manteldicke
- 18: Innenraum
- 19: Innenfläche
- 20: Innengewinde

- 21: Gewindedurchmesser
- 22: Außendurchmesser
- 23: Endbereich
- 24: Stirnkante
- 25: Flanschaußenseite

- 26: Gesamtlänge
- 27: Stirnkantendurchmesser
- 28: Stirnfläche
- 29: Spreizelement
- 30: Mantellinie

- 31: Winkel
- 32: Schlitz
- 33: Schlitzhöhe
- 34: Außenfläche
- 35: Scheitelpunkt

- 36: Einschnürdurchmesser
- 37: Grundfläche
- 38: Schnittkante
- 39: Hüllkreis
- 40: Hüllkreisdurchmesser

- 41: Stirnkante
- 42: Längssymmetrieebene
- 43: Längsstirnfläche
- 44: Querstirnfläche
- 45: Flanschunterseite

- 46: Schaft
- 47: Flanschlänge
- 48: Abstand
- 49: Teilung
- 50: Distanz

- 51: Schlitzbreite
- 52: Öffnunesweite
- 53: Schneidenfortsatz
- 54: Rundung
- 55: Fläche

- 56: Krümmungsfläche
- 57: Grundkörper
- 58: Bohrung
- 59: Bohrungsdurchmesser
- 60: Befestigungsmittel

- 61: Schraube
- 62: Schraubkopf
- 63: Kopfunterseite
- 64: Grundkörperoberseite
- 65: Montageteil

- 66: Pfeil
- 67: Hilfsebene
- 68: Versatz
- 69: Pfeil

## Patentansprüche

1. Befestigungselement mit einem ein Innengewinde aufnehmenden, zylinderförmigen Mantel, der an einem seiner stirnseitigen Enden zumindest ein in einer zu einer Längsmittelachse senkrechten Ebene den Mantel überragendes Stützelement aufweist und an einem vom Stützelement abgewendeten Endbereich des Mantels zumindest zwei diesen in seiner Längsrichtung überragende, in radialer Richtung verformbare Spreizelemente angeordnet sind und der Mantel mit den Spreizelementen aus einem einstückigen Bauteil aus Metall besteht, dadurch gekennzeichnet, daß der Mantel (2) durch Tiefziehverformung des Bauteils als in sich geschlossener Zylinder ausgebildet ist und mit den Spreizelementen (29) einen in sich geschlossenen Bauteil bildet und an einem Ende mit einem an den Zylinder angeformten, diesen überragenden, umlaufenden, als Stützelement (4) ausgebildeten Flansch (6) versehen ist, und daß die Spreizelemente (29) in dem dem Stützelement (4) abgewendeten Endbereich (23) am Zylinder in zu einer Längsmittelachse (3) radialer Richtung, eine Außenfläche (34) der Spreizelemente (29) überragend, in Umfangsrichtung umlaufende Schneidenfortsätze (53) aufweisen und daß am Stützelement (4) zumindest ein Ankerfortsatz (7) angeordnet ist und die Spreizelemente (29) in Richtung einer Länge konvergierend verlaufen und vom Stützelement (4) abgewendete Stirnflächen (28) der Spreizelemente (29) zueinander winkelig verlaufend angeordnet sind.

2. Befestigungselement nach Anspruch 1, dadurch gekennzeichnet, daß am Umfang des Mantels (2) bevorzugt drei gleichmäßig verteilte, durch Schlitze (32) voneinander beabstandete Spreizelemente (29) angeordnet sind.

3. Befestigungselement nach einem oder mehreren der Ansprüche 1 bis 2, dadurch gekennzeichnet, daß ein Hüllkreisdurchmesser (40) eines die Schneidenfortsätze (53) aufnehmenden Hüllkreises (39) in etwa einem Außendurchmesser (22) des Mantels (2) entspricht.

4. Befestigungselement nach einem oder mehreren der Ansprüche 1 bis 3, dadurch gekennzeichnet, daß die winkelig zueinander verlaufenden Stirnflächen (28) miteinander einen Winkel (31) von in etwa 100° bis 160°, bevorzugt 150° ausbilden und ein Schnittpunkt der Stirnfläche (28) außerhalb eines Innenraumes (18) des Befestigungselementes (1) ist.

5. Befestigungselement nach einem oder mehreren der Ansprüche 1 bis 3, dadurch gekennzeichnet, daß die winkelig zueinander verlaufenden Stirnflächen (28) miteinander einen Winkel (31) von in etwa 120° ausbilden und ein Schnittpunkt der Stirnfläche (28) innerhalb des Innenraumes (18) ist.

6. Befestigungselement nach einem oder mehreren der Ansprüche 1 bis 5, dadurch gekennzeichnet, daß die Spreizelemente (29) im Verlauf der Schlitzhöhe (33) eine konkav in Richtung der Längsmittelachse (3) verlaufende Außenfläche (34) aufweisen.

7. Befestigungselement nach einem oder mehreren der Ansprüche 1 bis 6, dadurch gekennzeichnet, daß ein äußerer Umrißverlauf der am Mantel (2) angeordneten Spreizelemente (29) in einer zur Längsmittelachse (3) senkrecht verlaufenden Ebene in etwa trigonal ausgebildet ist.

8. Befestigungselement nach einem oder mehreren der Ansprüche 1 bis 7, dadurch gekennzeichnet, daß das Stützelement (4) einen den Mantel (2) ringförmig überragenden Flansch (6) ausbildet und in einer zum Mantel (2) konzentrisch verlaufenden Stirnfläche (10) des Flansches (6) eine die Ankerfortsätze (7) ausbildende Stirnverzahnung (8) angeordnet ist.

9. Befestigungselement nach einem oder mehreren der Ansprüche 1 bis 8, dadurch gekennzeichnet, daß eine Umrißform des Stützelementes (4) eine von einer rotationssymmetrischen Form abweichende Form aufweist, z.B. mehreckig, oval etc.

10. Befestigungselement nach einem oder mehreren der Ansprüche 1 bis 9, dadurch gekennzeichnet, daß am Stützelement (4) zumindest ein zum Mantel (2) parallel verlaufender Ankerfortsatz (7) angeordnet ist.

11. Befestigungselement nach einem oder mehreren der Ansprüche 1 bis 10, dadurch gekennzeichnet, daß ein Abstand einander zugewandter Innenflächen (19) der Spreizelemente (29) im Bereich von Scheitelpunkten (35) kleiner ist als ein Gewindedurchmesser (21) des Innengewindes (20).

12. Befestigungselement nach einem oder mehreren der Ansprüche 1 bis 11, dadurch gekennzeichnet, daß eine in Richtung der Längsmittelachse (3) verlaufende Gesamtlänge (26) des Bauteils in etwa dem zweifachen Außendurchmesser (22) des Mantels (2) entspricht.

13. Befestigungselement nach einem oder mehreren der Ansprüche 1 bis 12, dadurch gekennzeichnet, daß eine Länge des Innengewindes (20) in etwa der Gesamtlänge (26) des Bauteils entspricht.

14. Befestigungselement nach einem oder mehreren der Ansprüche 1 bis 13, dadurch gekennzeichnet, daß eine Wandstärke des Bauteils zwischen 0,5 mm und 2 mm, bevorzugt 1,5 mm beträgt.

15. Befestigungselement nach einem oder mehreren der Ansprüche 1 bis 14, dadurch gekennzeichnet, daß das Blech des Bauteils aus einem nicht rostenden Material gebildet ist.

16. Befestigungselement nach einem oder mehreren der Ansprüche 1 bis 15, dadurch gekennzeichnet, daß das Blech des Bauteils mit einer Oberflächenbeschichtung versehen ist.

## Claims

1. Securing component with a cylindrical casing having an internal thread, which casing at one of its outside face ends has at least one support element projecting over the casing in a plane perpendicular to the longitudinal middle axis, and at an end region of the casing opposite the support element at least two expanding elements are arranged that project over the casing in longitudinal direction and are deformable in radial direction, and the casing with the expanding elements is a one piece component made of metal, characterised in that the casing (2) is formed by the deep drawing deformation of the component as a self-contained cylinder, and with the expanding elements (29) forms a self-contained component, and at one end is provided with a flange (6) designed as a support element (4) formed onto the cylinder and projecting over the latter, and in that on the cylinder in radial direction relative to the longitudinal middle axis (3) the expanding elements (29) in the end region (23) opposite the support element (4) have edge projections (53) that project over the outer surface (34) of the expanding elements (29) and run in circumferential direction, and in that on the support element (4) at least one securing projection (7) is arranged and the expanding elements (29) converge in the direction of length and by the support element (4) opposite outside faces (28) of the expanding elements (29) are arranged at an angle to one another.

2. Securing component according to claim 1, characterised in that on the periphery of the casing (2) preferably three evenly spaced expanding elements (29) are arranged spaced apart from one another by slots (32).

3. Securing component according to one or more of claims 1 to 2, characterised in that the enveloping circle diameter (40) of an enveloping circle (39) comprising the edge projections (53) corresponds approximately to the outer diameter (22) of the casing (2).

4. Securing component according to one or more of claims 1 to 3, characterised in that the outside faces (28) at an angle to one another together form an angle (31) of about 100° to 160°, preferably 150° and an intersection point of the outside face (28) lies outside the inner cavity (18) of the securing component (1).

5. Securing component according to one or more of claims 1 to 3, characterised in that the outside faces (28) positioned at an angle to one another together form an angle (31) of about 120° and an intersection point of the outside face (28) lies inside the inner cavity (18).

6. Securing component according to one or more of claims 1 to 5, characterised in that the expanding elements (29) in the extent of the slot height (33) have an outer surface (34) that is concave in the direction of the longitudinal middle axis (3).

7. Securing component according to one or more of claims 1 to 6, characterised in that the external outline of the expanding elements (29) arranged on the casing (2) is designed to be approximately trigonal in a plane perpendicular to the longitudinal middle axis (3).

8. Securing component according to one or more of claims 1 to 7, characterised in that the support element (4) forms a flange (6) projecting annularly over the casing (2) and in an outside face (10) of the flange (6) concentric to the casing (2) a face toothing (8) forming the securing projections (7) is arranged.

9. Securing component according to one or more of claims 1 to 8, characterised in that the outline of the support element (4) is not rotationally symmetrical, e.g. is polygonal, oval, etc.

10. Securing component according to one or more of claims 1 to 9, characterised in that on the support element (4) at least one securing projection (7) parallel to the casing (2) is arranged.

11. Securing component according to one or more of claims 1 to 10, characterised in that the distance between facing inner surfaces (19) of the expanding elements (29) is smaller in the region of apexes (35) than the thread diameter (21) of the internal thread (20).

12. Securing component according to one or more of claims 1 to 11, characterised in that the total length (26) of the component in the direction of the longitudinal middle axis (3) corresponds approximately to twice the outer diameter (22) of the casing (2).

13. Securing component according to one or more of claims 1 to 12, characterised in that the length of the internal thread (20) corresponds approximately to the total length (26) of the component.

14. Securing component according to one or more of claims 1 to 13, characterised in that the wall thickness of the component is between 0.5 mm and 2 mm, preferably 1.5 mm.

15. Securing component according to one or more of claims 1 to 14, characterised in that the sheet metal of the component is made of a rust-free material.

16. Securing component according to one or more of claims 1 to 15, characterised in that the sheet metal of the component is provided with a surface coating.

## Revendications

1. Elément de fixation avec une enveloppe cylindrique recevant un filetage intérieur qui présente à l'une de ses extrémités frontales au moins un élément d'appui faisant saillie sur l'enveloppe dans un plan perpendiculaire à l'axe médian longitudinal et où sont disposés à une zone d'extrémité, détournée de l'élément d'appui, de l'enveloppe au moins deux éléments d'écartement faisant saillie sur celui-ci dans sa direction longitudinale, déformables dans la direction radiale, et le manteau avec les éléments d'écartement est constitué d'un composant en une pièce en métal, caractérisé en ce que le manteau (2), par une déformation par emboutissage profond du composant, est réalisé sous forme de cylindre fermé en soi et forme avec les éléments d'écartement (29) un composant fermé en soi et est pourvu à une extrémité d'un rebord (6) réalisé comme élément d'appui (4) rapporté par formage au cylindre, faisant saillie sur celui-ci et s'étendant tout autour et en ce que les éléments d'écartement (29), dans la zone d'extrémité (23) détournée de l'élément d'appui (4) présentent au cylindre, dans une direction radiale à un axe médian longitudinal (3), en faisant saillie sur une surface extérieure (34) des éléments d'écartement (29), des prolongements de coupe (53) s'étendant dans la direction périphérique et qu'il est disposé à l'élément d'appui (4) au moins un prolongement d'ancrage (7) et que les éléments d'écartement (29) convergent en direction d'une longueur et que des faces frontales (28) des éléments d'écartement (29) éloignées de l'élément d'appui (4) sont disposées pour s'étendre l'une à l'autre selon un angle.

2. Elément de fixation selon la revendication 1, caractérisé en ce que sont disposés sur le pourtour de l'enveloppe (2) de préférence trois éléments d'écartement (29) répartis uniformément, écartés les uns des autres par des fentes (32).

3. Elément de fixation selon l'une ou plusieurs des revendications 1 à 2, caractérisé en ce qu'un diamètre de cercle enveloppant (40) d'un cercle enveloppant (39) recevant les prolongements de coupe (53) correspond approximativement à un diamètre extérieur (22) de l'enveloppe (2).

4. Elément de fixation selon l'une ou plusieurs des revendications 1 à 3, caractérisé en ce que les faces frontales (28) s'étendant selon un angle l'une à l'autre forment entre elles un angle (31) d'environ 100° à 160°, de préférence de 150°, et un point d'intersection de la face frontale (28) se situe à l'extérieur d'un espace intérieur (18) de l'élément de fixation (1).

5. Elément de fixation selon l'une ou plusieurs des revendications 1 à 3, caractérisé en ce que les faces frontales (28) s'étendant selon un angle l'une à l'autre forment entre elles un angle (31) d'environ 120° et qu'un point d'intersection de la face frontale (28) se situe à l'intérieur de l'espace intérieur (18).

6. Elément de fixation selon l'une ou plusieurs des revendications 1 à 5, caractérisé en ce que les éléments d'écartement (29) présentent au niveau de la hauteur de fente (33) une face extérieure (34) s'étendant d'une manière concave en direction de l'axe médian longitudinal (3).

7. Elément de fixation selon l'une ou plusieurs des revendications 1 à 6, caractérisé en ce qu'une allure de contour extérieur des éléments d'écartement (29) disposés à l'enveloppe (2) est réalisée à peu près d'une manière triagonale dans un plan s'étendant perpendiculairement à l'axe médian longitudinal (3).

8. Elément de fixation selon l'une ou plusieurs des revendications 1 à 7, caractérisé en ce que l'élément d'appui (4) réalise un rebord (6) faisant saillie annulairement sur l'enveloppe (2) et qu'il est disposé dans une face frontale (10) du rebord (6) s'étendant concentriquement à l'enveloppe (2) une denture frontale (8) réalisant les prolongements d'ancrage (7).

9. Elément de fixation selon l'une ou plusieurs des revendications 1 à 8, caractérisé en ce qu'une forme de contour de l'élément d'appui (4) a une forme s'écartant d'une forme symétrique en rotation, par exemple polygonale, ovale etc.

10. Elément de fixation selon l'une ou plusieurs des revendications 1 à 9, caractérisé en ce qu'il est disposé à l'élément d'appui (4) au moins un prolongement d'ancrage (7) s'étendant parallèlement à l'enveloppe (2).

11. Elément de fixation selon l'une ou plusieurs des revendications 1 à 10, caractérisé en ce qu'un écart entre des faces intérieures (19) orientées l'une vers l'autre des éléments d'écartement (29) est plus petit au voisinage de points de sommet (35) qu'un diamètre de filetage (21) du filetage intérieur (20).

12. Elément de fixation selon l'une ou plusieurs des revendications 1 à 11, caractérisé en ce qu'une longueur totale (26) du composant s'étendant en direction de l'axe médian longitudinal (3) correspond approximativement au diamètre extérieur double (22) de l'enveloppe (2).

13. Elément de fixation selon l'une ou plusieurs des revendications 1 à 12, caractérisé en ce qu'une longueur de filetage intérieur (20) correspond approximativement à la longueur totale (26) du composant.

14. Elément de fixation selon l'une ou plusieurs des revendications 1 à 13, caractérisé en ce qu'une épaisseur de paroi du composant représente entre 0,5 mm et 2 mm, et qu'elle est de préférence de 1,5 mm.

15. Elément de fixation selon l'une ou plusieurs des revendications 1 à 14, caractérisé en ce que la tôle du composant est réalisée en un matériau non rouillant.

16. Elément de fixation selon l'une ou plusieurs des revendications 1 à 15, caractérisé en ce que la tôle du composant est pourvue d'un revêtement de surface.
